# FASCICULE DE BREVET EUROPEEN

(11) **EP 2 351 328 B1**
(45) Date de publication et mention de la délivrance du brevet: **21.08.2019**
(21) Numéro de dépôt: 09748427.3
(22) Date de dépôt: 23.09.2009
(51) Int. Cl.: H04L 29/08, H04L 12/58

(54) **PROCEDE ET DISPOSITIF DE GENERATION D'INFORMATIONS DESCRIPTIVES DE LA SITUATION D'UN UTILISATEUR**
VERFAHREN UND ANORDNUNG ZUM ERZEUGEN VON DIE SITUATION EINES BENUTZERS BESCHREIBENDEN INFORMATIONEN
METHOD AND DEVICE FOR GENERATING INFORMATION DESCRIPTIVE OF THE SITUATION OF A USER

(30) Priorité: 30.09.2008 FR 0856576
(43) Date de publication de la demande: 03.08.2011
(73) Titulaire: Orange, 75015 Paris (FR)
(72) Inventeur: HENRY, Katell, F-29200 Brest (FR); GESTRAUD, Yann, F-35700 Rennes (FR); MILIN, Thierry, F-22660 Trelevern (FR)
(86) Numéro de dépôt international: PCT/FR2009/051793
(87) Numéro de publication internationale: WO 2010/037950

(56) Documents cités:
- WO-A-2006/042066
- US-A1- 2003 154 293
- US-A1- 2005 068 167
- US-A1- 2005 068 227

## Description

L'invention concerne le domaine des télécommunications et plus particulièrement un procédé et dispositif de génération d'informations descriptives de la situation d'un utilisateur.

De telles informations sont par exemple des informations dites ci-après informations de présence utilisées abondamment dans les systèmes de communication dits de messagerie instantanée.

Les informations de présence générées pour un utilisateur sont publiées et/ou partagées, c'est-à-dire transmises à d'autres utilisateurs pour les informer sur l'état de disponibilité et/ou de joignabilité d'un utilisateur et/ou sur son humeur du jour ou sur toute autre déclaration illustrant son contexte géographique, organisationnel ou un état émotionnel.

Les systèmes connus de communication génèrent automatiquement ces informations: une information sur un état de disponibilité de l'utilisateur est ainsi générée en fonction de règles et de différents critères, notamment en fonction de l'utilisation que l'utilisateur fait de son terminal et/ou de l'état de connexion de ce terminal à un réseau. Les demandes américaines US20050068227 et 20050068167 décrivent l'utilisation de règles de détermination d'informations de présence notamment en fonction de la localisation de l'utilisateur. Ces règles de détermination sont communes à tous les utilisateurs et uniquement appliquées par un procédé ou un dispositif de génération d'information de présence. Ces règles de détermination permettent seulement d'automatiser l'ajout de précision dans les informations de présence pour tous les utilisateurs.

En complément, cet utilisateur a la possibilité de modifier manuellement son état de disponibilité et/ou de modifier le message informant les autres utilisateurs de son état. De cette manière, il peut personnaliser les informations de présence publiées à son sujet. Cependant, ceci peut devenir rapidement fastidieux pour l'utilisateur, dès lorsqu'il souhaite systématiquement personnaliser ces informations ou les adapter à son mode de travail ou sa localisation géographique.

Par observation des comportements des utilisateurs de tels systèmes, les inventeurs ont ainsi constaté le besoin de faciliter la tâche de l'utilisateur lorsqu'il s'agit de personnaliser les informations de présence publiées à son sujet.

Un des buts de l'invention est de remédier à des problèmes et inconvénients de l'état de la technique et/ou d'y apporter des améliorations.

L'invention concerne, selon un premier aspect, un dispositif de génération d'informations descriptives de la situation d'un utilisateur à un instant donné, lesdites informations étant destinées à être transmises à d'autres utilisateurs, le dispositif comprenant
- des moyens pour déterminer au moins une information descriptive par application d'au moins une règle de détermination ;
- des moyens de génération d'une information descriptive en fonction d'au moins une des informations suivantes :
   - une information de présence générée par les moyens de génération préalablement à l'information descriptive,
   - l'information fournie par les moyens de détermination (30),
   une information envoyée par l'utilisateur ;
- des moyens d'apprentissage de comportements d'un utilisateur, agencés pour créer ou modifier une règle de détermination d'informations, ladite règle de détermination étant fonction :
   - d'un comportement de personnalisation d'une information de présence par l'utilisateur, et
   - d'au moins un paramètre de contexte descriptif d'un contexte dans lequel se trouve ledit utilisateur lorsqu'il manifeste ledit comportement.

L'invention prévoit de coupler les moyens de génération d'informations descriptives de la situation d'un utilisateur avec des moyens d'apprentissage du comportement d'un utilisateur pour générer automatiquement des règles qui sont utilisées pour déterminer les informations concernant l'utilisateur.

Les règles définissent une relation logique entre un contexte et un comportement de l'utilisateur. Il est ainsi possible d'obtenir une personnalisation des informations de présence de manière automatique et en cohérence avec le comportement de l'utilisateur.

Les souhaits d'expression de l'utilisateur sont ainsi pris en compte en ce qu'il influence à tout moment le dispositif par son comportement.

Selon un mode de réalisation, les moyens d'apprentissage sont agencés pour créer ou modifier ladite règle de détermination en cas de détection d'un comportement répétitif dudit utilisateur dans un contexte donné.

Ce mode de réalisation permet d'automatiser la personnalisation des informations sur un utilisateur lorsque celui-ci adopte un comportement répétitif, et ce sans qu'il soit nécessaire que l'utilisateur donne les indications nécessaires au système. La répétition d'un même comportement étant une indication de l'importance de ce comportement pour l'utilisateur, le dispositif comporte une capacité d'adaptation au degré d'importance que représente ce comportement. Il suffit pour cela de définir un seuil pour le nombre de détections déclenchant la création ou modification de règle.

Selon un premier mode de réalisation, ledit comportement comprend une action pour requérir une modification de ladite au moins une information.

L'invention permet d'automatiser la personnalisation des informations concernant un utilisateur lorsque celui-ci requiert des modifications des informations le concernant.

Les souhaits de l'utilisateur sont ici pris en compte car l'utilisateur influence le système d'apprentissage par la nature des modifications qu'il requiert pour les informations de présence.

Il est par exemple possible de personnaliser de manière automatisée des informations de présence en fonction de la localisation d'un utilisateur, si celui-ci requiert une modification des informations de présence publiées à son sujet lorsqu'il se situe dans un lieu ou site géographique particulier. Dans ce cas, la personnalisation consiste par exemple à publier une information de présence indiquant la localisation de l'utilisateur.

Selon un deuxième mode de réalisation, ledit comportement est un comportement d'utilisation d'outils de communication.

Il est donc possible de personnaliser de manière automatisée les informations de présence en fonction des habitudes de communication d'un utilisateur, si par exemple celui-ci n'utilise pas certains moyens de communication lorsqu'il se trouve en réunion ou en déplacement. Dans ce cas, la personnalisation consiste par exemple à publier une information de présence indiquant que l'utilisateur est joignable uniquement par courriel, mais pas par téléphone.

Selon un troisième mode de réalisation, le dispositif selon l'invention comprend des moyens d'édition accessibles par un utilisateur pour la création ou la modification d'au moins une dite règle.

De cette manière, l'utilisateur garde un contrôle sur les règles qui sont définies pour la génération d'informations destinées à être publiées à son sujet. Ceci a pour effet d'améliorer l'adaptation des règles aux besoins et souhaits de l'utilisateur.

Ces trois modes de réalisation sont utilisables en combinaison pour la mise en oeuvre de l'invention et la génération de règles.

L'apprentissage du comportement de l'utilisateur peut porter ainsi sur différents aspects du comportement de l'utilisateur:
- lorsque celui-ci modifie des informations de présence publiées à son sujet;
- lorsque celui-ci développe des habitudes, c'est-à-dire un comportement répétitif, dans un contexte donné, par exemple un comportement particulier lorsqu'il use de moyens de communication d'un terminal mis à sa disposition, ou un comportement particulier fonction de sa localisation (géographique ou par détection d'une connexion à des réseaux particuliers tels que sa passerelle domestique résidentielle, etc)

Selon une variante de réalisation, le dispositif selon l'invention comprend des moyens de notification pour, en cas de création, respectivement de modification, d'une règle de détermination demander à l'utilisateur de valider eVou modifier cette règle de détermination.

Malgré l'automatisation apportée par les moyens d'apprentissage, l'utilisateur garde ainsi un contrôle sur les règles utilisées pour générer des informations le concernant.

L'invention concerne, selon un deuxième aspect, un procédé de génération d'informations descriptives de la situation d'un utilisateur à un instant donné, lesdites informations étant destinées à être transmises à d'autres utilisateurs, le procédé comprenant
- une étape de détermination d'au moins une information descriptive par application d'au moins une règle de détermination s'il existe une règle de détermination applicable;
- une étape de génération d'une information descriptive en fonction d'au moins une des informations suivantes :
   - une information de présence générée par les moyens de génération préalablement à l'information descriptive,
   - l'information fournie par les moyens de détermination (30),
   - une information envoyée par l'utilisateur ;
- une étape de mise en oeuvre de moyens d'apprentissage de comportements d'un utilisateur, agencés pour créer ou modifier une règle de détermination d' informations, ladite règle de détermination étant fonction :
   - d'un comportement de personnalisation d'une information de présence par l'utilisateur, et
   - d'au moins un paramètre de contexte descriptif d'un contexte dans lequel se trouve ledit utilisateur lorsqu'il manifeste ledit comportement.

Les avantages énoncés pour le dispositif selon l'invention sont transposables directement au procédé selon l'invention.

Selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'un dispositif faisant partie d'un système de gestion de données de présence et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur ou processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon une autre implémentation, l'invention est mise en oeuvre au moyen de composants logiciels et/ou matériels. Dans cette optique, le terme module peut correspondre dans ce document aussi bien à un composant logiciel ou qu'à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous. Un composant matériel correspond à tout élément d'un ensemble matériel (ou hardware) apte à mettre en oeuvre une fonction ou un ensemble de fonctions.

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 représente de manière schématique un système de communication intégrant un dispositif selon l'invention;
- la figure 2 représente un organigramme d'un mode de réalisation d'un procédé mis en oeuvre par un module d'apprentissage du système de la figure 1;
- la figure 3 représente un organigramme d'un mode de réalisation d'un procédé mis en oeuvre par un module d'enrichissement du système de la figure 1.

Les informations sur la situation de l'utilisateur qui sont générées par le dispositif selon l'invention sont par exemple:
- des informations sur son activité à un instant donné ou son état de disponibilité;
- des informations sur sa localisation à un instant donné;
- des informations sur son état courant de joignabilité ou son état de connexion à un réseau;
- des informations sur son humeur, ses pensées, sa condition physique, etc à un instant donné ou
- toute autre information, sous forme généralement de déclaration, illustrant son contexte géographique, organisationnel ou un état émotionnel à un instant donné.

Les modes de publication et diffusion de ces informations sont par exemple ceux utilisés dans les services de messagerie instantanée pour diffuser les informations de présence (notamment l'état courant de disponibilité / joignabilité de chaque utilisateur). Les spécifications protocolaires existantes ou systèmes propriétaire existant sur la notion de présence sont notamment applicables pour la mise en oeuvre de l'invention et donc les modes de partage / publication / échange de ces informations. Ces informations peuvent être publiées / partagées / échangées sous diverses formes appropriées : sous forme de texte, photo, vidéo, ou tout format de document multimédia.

Pour simplifier la lecture et la compréhension de l'exposé, les informations sur la situation de l'utilisateur seront nommées "informations de présence" (données et paramètres de présence associés). Il est entendu que l'invention est applicable à tout type d'informations sur la situation de l'utilisateur à un instant donné, pour lesquelles des exemples types ont été donnés ci-dessus.

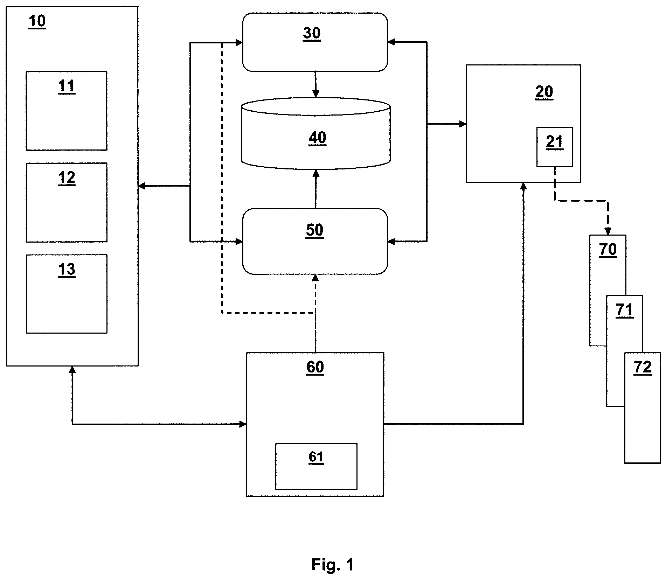

L'invention est décrite dans le cas de son application à la mise en oeuvre d'un système de gestion de données de présence. Ce système, représenté schématiquement à la figure 1, comprend les entités suivantes:
- un serveur 20 de présence;
- un module 30 d'enrichissement;
- un module 50 d'apprentissage;
- une base 40 de données de règles;
- un ensemble 10 de serveurs 11, 12, 13 de collecte d'informations;
- un terminal 60 utilisateur;
- un ensemble 70 de modules applicatifs 71, 72, 73 d'exploitation de données de présence.

Le serveur de présence 20 est responsable de la génération des documents 21 de présence pour les utilisateurs du système, un document de présence étant généré pour chacun de ces utilisateurs, dès lors que celui-ci est connecté et publie ou partage des informations le concernant. Les utilisateurs non connectés ou n'ayant pas publié ni partagé d'information n'ont quant à eux pas forcément de document de présence associé.

Un document de présence 21 comprend des informations de présence sur un utilisateur, ces informations étant destinées à être publiées, c'est-à-dire destinées à être transmises à des terminaux d'autres utilisateurs pour informer ces autres utilisateurs.

Ces informations de présence sont définies au moyen d'un ou plusieurs paramètres, dits paramètres de présence, susceptible chacun de prendre plusieurs valeurs. Ces paramètres de présence sont connus des systèmes de gestion de données de présence sous l'appellation "éléments de présence". Selon un exemple de réalisation, un tel document est enregistré dans le serveur de présence 20 au format XML, chaque paramètre étant identifié au moyen d'une balise donnant le nom de ce paramètre et au moins une valeur affectée à ce paramètre. Tout autre format de document approprié est également utilisable.

Dans le cadre de cette invention, un paramètre d'information de présence susceptible d'être utilisé dans un document de présence est par exemple:
- un état de connexion au réseau d'un terminal de l'utilisateur, ce paramètre caractérisant la possibilité d'établir une communication avec cet utilisateur, ce paramètre étant nommé par exemple "connected" et pouvant prendre par exemple les valeurs "connecté", "non connecté", etc;
- un état de disponibilité / joignabilité de l'utilisateur, ce paramètre étant nommé par exemple "state" et pouvant prendre par exemple les valeurs "disponible", "ne pas déranger", "joignable par email uniquement", "joignable sur mobile uniquement"; "joignable via sa télévision", de manière à spécifier un médium ou un équipement particulier au moyen duquel l'utilisateur est joignable, etc;

- une information sur l'activité courante de l'utilisateur, déduite d'un agenda de cet utilisateur ou des moyens de communication couramment utilisés par un utilisateur, ce paramètre pouvant prendre par exemple les valeurs "en réunion", "en congés", "en déplacement", "présent", "en communication téléphonique", etc;
- une information sur la localisation courante de l'utilisateur, déduite de l'état de connexion au réseau de son terminal ou d'une valeur de localisation géographique disponible sur le terminal de l'utilisateur, ce paramètre pouvant prendre par exemple les valeurs "at home", "en déplacement", "a Londres", etc;
- un message de contenu libre au moyen duquel l'utilisateur est susceptible de donner une information le concernant, ce paramètre étant nommé par exemple "message" et pouvant prendre par exemple des valeurs quelconques "en plein travail", "sous le soleil", "à Tokyo", "à l'aéroport", etc; un tel message peut être un message textuel ou plus généralement un message multimédia, contenir ou non des images, du son, des liens hypertexte, etc; ce type de paramètre permet à l'utilisateur de personnaliser les informations qu'il partage avec d'autres utilisateurs puisqu'il n'est pas obligé de choisir parmi une liste de valeurs prédéfinies la valeur de ce paramètre, c'est-à-dire le contenu du message

En outre, le document de présence peut comprendre un contenu multimédia ou faire référence à un contenu multimédia, contenu multimédia que l'utilisateur souhaite publier en accompagnement de ses informations de présence: il peut s'agir d'une image un logo ou une vidéo à afficher ou d'un son ou morceau de musique à jouer ou diffuser.

Un document de présence a par exemple le contenu suivant:

```
 <?xml version="1.0" encoding="UTF-8"?>
  <presence xmlns="urn:ietf:params:xml:ns:pidf"
       entity="sip:robert@orange.fr">
       <person>
            <mood>
                 <grumpy/>
            </mood>
       </person>
  </presence>
```

Où :
- la balise <xml version> donne la version du langage XML utilisée;
- la balise < presence > indique qu'il s'agit d'un document de présence pour un utilisateur identifiée par l'adresse électronique indiquée, en l'occurrence robert@orange.fr
- la balise <person> indique que les informations de présence, données dans la partie du document identifiée par cette balise, concernent l'utilisateur en tant que personne physique;
- la balise < mood > est le nom d'un paramètre de présence servant à informer sur l'humeur de l'utilisateur concerné;
- la balise < grumpy / > donne la valeur du paramètre de présence "mood".

Tout autre paramètre de présence utile pour la mise en oeuvre d'un système de gestion de données de présence est également utilisable.

Les modules applicatifs 71, 72, 73 sont conçus pour interroger le serveur de présence 20 afin d'obtenir un document de présence associé à un utilisateur. Le document de présence fourni à un module applicatif 71, 72, 73 est exploité par ce module selon la finalité propre à ce module: affichage des informations de présence, génération de notification selon les valeurs des paramètres de présence, etc.

Les informations de présence générées pour un utilisateur par le serveur de présence 20 sont transmises sur requête d'un utilisateur, à un terminal 60 de cet utilisateur.

La possibilité est donnée à un utilisateur du terminal 60 de modifier, notamment de personnaliser, par envoi d'une requête appropriée au serveur de présence 20, les informations de présence qui lui sont associées et qui sont produites par ce serveur.

Par exemple, l'utilisateur peut définir de nouvelles valeurs possibles pour un paramètre de présence, correspondant à des états de présence personnalisés.

Par exemple, l'utilisateur peut saisir un message personnalisé ou envoyer un logo, et demander à ce que ce message ou ce logo soit affiché, en accompagnement des informations de présence générées par ce serveur sur cet utilisateur, lorsque ces informations de présence sont transmises à un modules applicatifs 71, 72, 73 en vue de leur diffusion ou publication par ces modules.

Le serveur de présence 20 est agencé pour, en cas de modification requise, envoyer au module 50 d'apprentissage une notification l'informant de la modification.

Les serveurs 11, 12, 13 de collecte d'informations sont des serveurs fournissant des données d'entrée au système, à partir desquelles sont déduites des informations de présence. Ces informations sont dites informations de contexte: elles renseignent sur le contexte dans lequel se trouve un utilisateur ou son terminal, par exemple sur la localisation géographique d'un terminal ou de l'utilisateur, le site ou le bâtiment ou le moyen de transport dans lequel il se trouve, le mode de communication utilisé par un utilisateur, une activité détectée pour cet utilisateur, etc. Toute grandeur physique mesurable ou paramètre détectable, qui est associé - directement ou indirectement, c'est-à-dire par le biais d'un terminal de l'utilisateur - à l'utilisateur est susceptible de servir de paramètre de contexte pour un utilisateur.

Une information de contexte est générée par un des serveurs de l'ensemble 10 de serveurs, chaque serveur générant un ou plusieurs paramètres de contexte et au moins une valeur affectée à ces paramètres de contexte.

L'ensemble 10 de serveur comprenant par exemple:
- un serveur 11 de détection de connexion, capable de déterminer à un instant donné l'état de connexion à un réseau d'un terminal d'un utilisateur, la valeur du paramètre de contexte représentant cet état prenant par exemple une valeur binaire (état connecté / état non connecté);
- un premier serveur de localisation 12, capable de générer un paramètre de contexte représentant la localisation géographique telle que par exemple la localisation GPS (Global Positioning System) d'un terminal d'un utilisateur ou sa localisation réseau par identification du point d'accès de connexion;
- un deuxième serveur de localisation (non représenté), capable d'obtenir une information sur la localisation dans un réseau GSM d'un terminal d'un utilisateur et de détecter que ce terminal est à l'étranger (situation de "roaming"), c'est-à-dire accessible via un équipement d'un opérateur d'un autre pays,
- un serveur 13 de détection de comportement de communication (non représenté), capable de déterminer, à un instant donné, l'usage / non usage de moyens de communication de ce terminal: envoi d'un message électronique, envoi d'un fax, communication téléphonique en cours, conversation par messagerie instantanée en cours, etc...; dans ce cas, un paramètre de contexte est associé à chaque moyen de communication, ce paramètre prenant par exemple une valeur binaire indiquant un usage / non usage du moyen de communication respectif; ce serveur 13 coopère avec un module 61 de détection d'activité, localisé sur le terminal 60 de l'utilisateur concerné;
- un serveur de gestion d'agenda électronique (non représenté), gérant les données d'un agenda électronique et capable de déterminer, à un instant donné, quelle est l'activité courante de l'utilisateur, ce serveur déterminant la valeur d'un paramètre de contexte, nommé par exemple "activité", définissant l'activité courante de l'utilisateur, ce paramètre pouvant prendre plusieurs valeurs telles que "en réunion", "en déplacement", "en congés", etc;
- un serveur de gestion des visiteurs (non représenté), qui, dans le cas de l'application de l'invention au domaine médical ou au domaine de l'assistance aux personnes âgées, gère les entrées et sorties du domicile, est capable d'identifier les visiteurs absents / présents et/ou est capable de déterminer, à un instant donné, quelle est l'activité courante de l'utilisateur; ce serveur détermine par exemple la valeur d'un paramètre de contexte nommé "home activity", qui définit l'activité courante de l'utilisateur, ce paramètre peut être complété/précisé et prendre plusieurs valeurs telles que "en soins", "avec l'infirmière", "à l'hôpital", etc;

Tout autre type de serveur susceptible de générer une information de contexte utile pour la mise en oeuvre d'un système de gestion de données de présence est également utilisable.

En cas de modification / de mise à jour d'une information de contexte générée par l'un de ces serveurs, le serveur concerné est conçu pour envoyer au module 30 d'enrichissement et au module 50 d'apprentissage une notification l'informant de ce changement.

Les informations de contexte générées pour un utilisateur par l'un des serveurs 10, 11 sont transmises sur requête d'un utilisateur, à un terminal 60 de cet utilisateur.

Dans ce mode de réalisation, le serveur concerné est également agencé pour, en cas de modification requise par un utilisateur, envoyer au module 30 d'enrichissement et au module 50 d'apprentissage une notification: cette notification comprend la nouvelle valeur du paramètre modifié ou invite le module 50 d'apprentissage / le module 30 d'enrichissement à interroger le serveur émetteur de la notification.

La base 40 de données de règles comprend les règles de détermination des documents de présence. Cette base de données 40 est en accès partagé par le module 50 d'apprentissage qui génère ces règles et par le module 30 d'enrichissement qui applique ces règles pour modifier les documents de présence générés par le serveur de présence 20.

Une règle établit un lien logique entre, d'une part, une ou des informations de contexte, et d'autre part, une ou des informations de présence. Plus précisément, elle détermine une fonction de correspondance entre un ou des paramètres de contexte et un ou des paramètres de présence. Pour chaque règle, une valeur courante d'un ou de plusieurs paramètres de présence est donc définie en fonction d'un jeu de valeurs courantes d'un ou de plusieurs paramètres de contexte.

Par exemple, si la localisation d'un utilisateur est différente de son lieu de travail et que cet utilisateur est en déplacement professionnel, alors l'information de présence indiquant l'état de disponibilité de l'utilisateur est personnalisée par ajout d'un message du type "en déplacement à Rome" pour indiquer qu'il se trouve en déplacement et préciser le lieu de ce déplacement.

Cela revient à déterminer si le paramètre "localisation", géré par un serveur de localisation, a une valeur différente de la localisation par défaut associée au lieu de travail de l'utilisateur et si le paramètre "activité", géré par un serveur de gestion d'agenda électronique, a une valeur égale à "en déplacement". Dans ce cas le paramètre de présence "message" prend la valeur "en déplacement à Rome".

Le module 50 d'apprentissage génère les règles d'apprentissage à partir,
- d'une part, des informations de contexte générées par les serveurs 11, 12, 13 de collecte d'informations et des notifications reçues de ces serveurs;
- d'autre part, des documents de présence générés par le serveur de présence 20 et des notifications reçues de ce serveur.

Une ou plusieurs règles de détermination étant associées à un utilisateur, une règle est propre à un utilisateur. La possibilité est donnée à chaque utilisateur de consulter et/ou d'éditer, lors d'une connexion établie entre un terminal 60 de cet utilisateur et le serveur de présence 20, les règles de détermination qui lui sont associées et qui sont produites par le module 50 d'apprentissage.

En cas de modification, suppression ou ajout d'au moins une règle de détermination par un utilisateur, le module 50 d'apprentissage mémorise la ou les règles concernées dans la base 40 de données de règles, puis envoie une notification au module 30 d'enrichissement pour que celui-ci déclenche une mise à jour du document de présence associé à cet utilisateur.

La mise à jour de la base de règle est requise par le module 50 d'apprentissage en cas de notification reçue du serveur de présence 20, soit en cas de requête expresse d'un utilisateur.

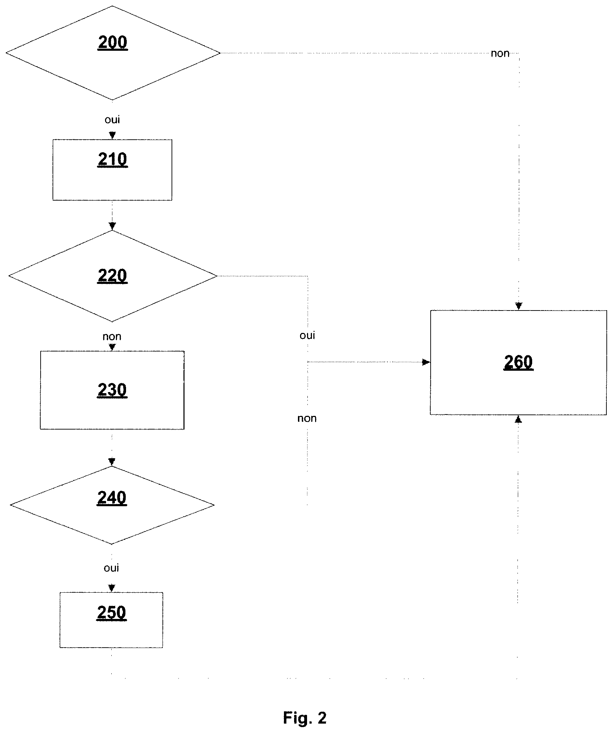

Lorsque la notification reçue par le module 50 d'apprentissage provient du serveur de présence, le processus de mise à jour de document de présence effectué est décrit ci-dessous par référence à la figure 2.

Le module 30 d'enrichissement requiert la mise à jour des documents de présence mémorisés par le serveur de présence 20 en fonction:
- d'une part, des informations de contexte générées par les serveurs 11, 12, 13 de collecte d'informations et des notifications reçues de ces serveurs;
- d'autre part, des règles de détermination gérées par le module 50 d'apprentissage et des notifications reçues de ce serveur.

Une telle mise à jour d'un document de présence est requise notamment suite à une notification reçue d'un des serveurs 11, 12, 13 de génération de paramètres de contexte ou suite à une notification reçue du module 50 d'apprentissage.

En cas de réception d'une notification, le module 30 d'enrichissement requiert une mise à jour du document de présence associé à l'utilisateur pour lequel la notification a été émise. Lors d'une requête de mise à jour d'un document de présence, le module 30 d'enrichissement obtient le document du serveur de présence 20, applique les règles de détermination associé à l'utilisateur pour lequel ce document de présence est défini, met à jour les informations de présence associées à un utilisateur puis génère un document de présence avec les informations de présence mises à jour et enfin renvoie ce document mis à jour au serveur de présence 20 pour mémorisation.

Lorsque la notification reçue par le module 30 d'enrichissement provient du module 50 d'apprentissage, la mise à jour suppose l'application de l'ensemble des règles définies pour cet utilisateur - y compris la règle nouvellement créée pour cet utilisateur, règle pour laquelle la notification a été émise - aux valeurs courantes des paramètres de contexte en vue de la mise à jour des valeurs courantes des paramètres de présence du document de présence de cet utilisateur.

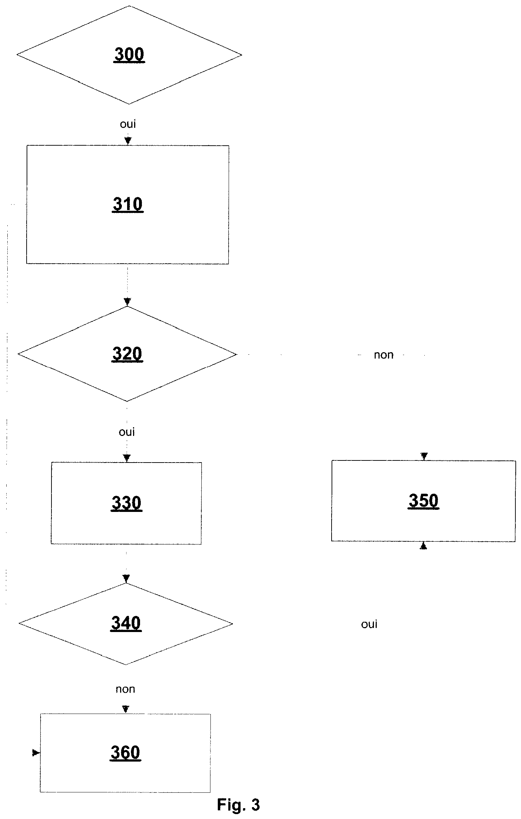

Lorsque la notification reçue par le module 30 d'enrichissement provient d'un des serveurs 11, 12, 13, le processus de mise à jour de document de présence effectué est décrit ci-dessous par référence à la figure 3.

Un mode de réalisation d'un procédé mis en oeuvre par le module 50 d'apprentissage est décrit par référence à la figure 2, lorsque le module 50 d'apprentissage reçoit une notification en provenance ou du serveur de présence 20.

A l'étape 200, le module 50 d'apprentissage reçoit la notification en provenance du serveur de présence 20. Une telle notification signale une modification du document de présence pour un utilisateur U1.

A l'étape 210, le module 50 d'apprentissage analyse la notification reçue et détermine quels sont le ou les paramètres de présence dont la valeur a été modifiée.

A l'étape 220, le module 50 d'apprentissage détermine, pour chacun des paramètres de présence dont la valeur a été modifiée, par interrogation de la base 40 de règles, s'il existe une règle définissant pour un contexte dans lequel ce paramètre de présence prend une valeur courante égale à la valeur modifiée. Dans l'affirmative, l'étape 260 est exécutée. Dans le cas contraire, l'étape 230 est exécutée.

A l'étape 230, le module 50 d'apprentissage incrémente d'une unité la valeur d'un compteur associé à la valeur courante du paramètre de présence dont la valeur est modifiée et mémorise, en association avec la valeur courante du paramètre de présence, un jeu de valeurs courantes de paramètres de contexte comprenant les valeurs courantes de tous les paramètres de contexte.

A l'étape 240, le module 50 d'apprentissage détermine si la valeur du compteur, après incrémentation à l'étape 230, dépasse un seuil prédéterminé. Dans l'affirmative, l'étape 250 est exécutée. Dans le cas contraire, l'étape 260 est exécutée.

A l'étape 250, le module 50 d'apprentissage crée une nouvelle règle ou modifie la règle courante associée à la valeur courante du paramètre de présence, lorsque, au moins un paramètre de contexte prend une valeur identique dans un nombre minimal prédéfini de jeux de valeurs qui sont enregistrés en association avec la valeur courante du paramètre de présence. Dans ce cas, la nouvelle règle définit une association entre d'une part, un contexte défini par les valeurs des paramètres de contexte prenant une valeur identique dans tous les jeux de valeurs analysés, et d'autre part, la valeur courante du paramètre de présence.

De cette manière, le module d'apprentissage est agencé pour générer ou modifier une règle, fonction d'au moins un paramètre de contexte, décrivant un contexte associé à un terminal, respectivement à un utilisateur, si la modification du document de présence, pour laquelle une notification a été émise serveur de présence 20, est requise lorsque ce terminal, respectivement cet utilisateur, se trouve dans ce contexte.

Selon un mode de réalisation, le module 50 d'apprentissage envoie, préalablement à l'enregistrement de la règle crée ou modifiée, une demande de confirmation et/ou vérification de l'utilisateur.

Suite à la génération ou modification une règle, le module 50 d'apprentissage envoie une notification au module 30 d'enrichissement pour que celui-ci requière, comme déjà décrit ci-dessus, la mise à jour du document de présence associé à l'utilisateur U1.

A l'étape 260, exécutée suite à l'étape 220 ou 240, le module 50 d'apprentissage envoie une notification au serveur de présence pour qu'il prenne en compte le document de présence de l'utilisateur U1, sans modification, aucune règle n'ayant été crée ou modifiée dans ce cas.

Un mode de réalisation d'un procédé mis en oeuvre par le module 30 d'enrichissement est décrit par référence à la figure 3.

A l'étape 300, le module 30 d'enrichissement reçoit une notification d'un des serveurs 11, 12, 13 de génération de paramètres de contexte, cette notification signalant une modification de la valeur d'au moins un paramètre de contexte généré par l'un de ces serveurs pour un utilisateur U1 ou son terminal.

A l'étape 310, le module 30 d'enrichissement analyse la notification reçue et détermine quels sont le ou les paramètres de contexte dont la valeur a été modifiée. Le module 30 d'enrichissement détermine pour chacun des paramètres de contexte dont la valeur a été modifiée, par interrogation de la base 40 de règles, s'il existe une règle applicable à un contexte dans lequel ce paramètre de contexte prend une valeur courante égale à la valeur modifiée. Dans l'affirmative, l'étape 320 est exécutée. Dans le cas contraire, l'étape 360 est exécutée.

A l'étape 320, le module 30 d'enrichissement obtient du serveur de présence le document de présence de l'utilisateur U1, tel que mémorisé par le serveur 20 de présence, puis génère un document de présence modifié, par application de la ou des règles identifiées à l'étape 310. Le module 30 d'enrichissement détermine si l'utilisateur a requis une validation avant mise à jour effective de son document de présence. Dans l'affirmative, l'étape 330 est exécutée. Dans le cas contraire, l'étape 350 est exécutée.

A l'étape 330, le module 30 d'enrichissement envoie une notification sur le terminal de l'utilisateur pour lui présenter le document de présence modifié par application de la ou des règles identifiées à l'étape 310.

A l'étape 340, le module 30 d'enrichissement reçoit la réponse de l'utilisateur U1. En cas d'acceptation par l'utilisateur, l'étape 350 est exécutée. Dans le cas contraire, l'étape 360 est exécutée

A l'étape 350, le module 30 d'enrichissement envoie une notification au serveur de présence pour requérir la mise à jour effective du document de présence de l'utilisateur U1, en lui envoyant le document de présence modifié par application de la ou des règles identifiées à l'étape 310. Le document de présence modifié est enregistré par le serveur de présence 20.

A l'étape 360, exécutée suite à l'étape 340 ou 310, le procédé se termine, le module 30 d'enrichissement ne requérant auprès du serveur de présence 20 aucune mise à jour du document de présence de l'utilisateur U1.

L'invention de prête à de nombreuses variantes de réalisation: les paramètres de présence et les paramètres de contexte peuvent être plus ou moins nombreux selon le besoin. Les règles utilisées peuvent être plus ou moins complexes, selon les ressources en calcul du système.

L'invention est donc applicable à tout type de système de gestion de données concernant un utilisateur, quel que soit les serveurs utilisés pour générer les informations de contexte nécessaires. Elle prévoit un mécanisme générique, reposant sur la définition de règles établissant des liens logiques entre paramètres de contexte et paramètres concernant la situation de l'utilisateur.

Le périmètre d'application concerne aussi bien les moyens de communication utilisés dans la sphère privée ou professionnelle, mais aussi d'autres domaines tels que le domaine médical et en particulier l'assistance aux personnes âgées, handicapées ou malades.

De manière générale, l'invention est ainsi applicable à la détermination automatisée d'informations concernant un utilisateur en fonction de paramètres de contexte.

## Revendications

1. Dispositif de génération d'informations descriptives de la situation d'un utilisateur à un instant donné, lesdites informations étant destinées à être transmises à d'autres utilisateurs, le dispositif comprenant
- des moyens (30) pour déterminer au moins une information descriptive par application d'au moins une règle de détermination ;
- des moyens de génération (20) d'une information descriptive en fonction d'une moins une des informations suivantes :
• une information de présence générée par les moyens de génération (20) préalablement à l'information descriptive,
• l'information fournie par les moyens de détermination (30),
• une information envoyée par l'utilisateur ;
**caractérisé en ce que** le dispositif de génération d'informations descriptives comprend en outre :
- des moyens (50) d'apprentissage de comportements d'un utilisateur, agencés pour créer ou modifier une règle de détermination d' informations, ladite règle de détermination étant fonction :
• d'un comportement de personnalisation d'une information de présence par l'utilisateur, et
• d'au moins un paramètre de contexte descriptif d'un contexte dans lequel se trouve ledit utilisateur lorsqu'il manifeste ledit comportement.

2. Dispositif selon la revendication 1, dans lequel les moyens d'apprentissage sont agencés pour créer ou modifier ladite règle de détermination en cas de détection d'un comportement répétitif dudit utilisateur dans un contexte donné.

3. Dispositif selon la revendication 2, dans lequel ledit comportement comprend une action pour requérir une modification de ladite au moins une information.

4. Dispositif selon la revendication 2, comprenant ledit comportement est un comportement d'utilisation d'outils de communication.

5. Dispositif selon la revendication 1, comprenant des moyens de notification pour, en cas de création, respectivement de modification, d'une règle de détermination demander à l'utilisateur de valider et/ou modifier cette règle de détermination.

6. Procédé de génération d'informations descriptives de la situation d'un utilisateur à un instant donné, lesdites informations étant destinées à être transmises à d'autres utilisateurs, le procédé comprenant
- une étape de mise en oeuvre de moyens (50) d'apprentissage du comportement d'un utilisateur, agencés pour créer ou modifier une règle de détermination d'au moins une dite information, ladite règle de détermination étant fonction :
• d'un comportement de personnalisation d'une information de présence par l'utilisateur, et
• d'au moins un paramètre de contexte descriptif d'un contexte dans lequel se trouve ledit utilisateur lorsqu'il manifeste ledit comportement, et
- une étape de détermination d'au moins une dite information par application d'au moins une dite règle de détermination.

7. Procédé selon la revendication 6, dans lequel ladite règle de détermination est créé, respectivement modifiée, en cas de détection d'un comportement répétitif dudit utilisateur dans un contexte donné.

8. Programme informatique comprenant des instructions logicielles pour la mise en oeuvre d'un procédé selon la revendication 6 ou 7 lorsque ledit programme est exécuté par un processeur de données.

9. Support d'enregistrement lisible par un processeur de données sur lequel est enregistré un programme comprenant des instructions de code de programme pour l'exécution des étapes d'un procédé selon la revendication 6 ou 7.

## Patentansprüche

1. Vorrichtung zur Erzeugung deskriptiver Informationen der Situation eines Benutzers zu einem gegebenen Zeitpunkt, wobei die Informationen dazu bestimmt sind, an andere Benutzer übertragen zu werden, wobei die Vorrichtung enthält
- Einrichtungen (30) zur Bestimmung mindestens einer deskriptiven Information durch Anwendung mindestens einer Bestimmungsregel;
- Einrichtungen (20) zur Erzeugung einer deskriptiven Information abhängig von mindestens einer der folgenden Informationen:
• eine Anwesenheitsinformation, die von den Erzeugungseinrichtungen (20) vor der deskriptiven Information erzeugt wird,
• die von den Bestimmungseinrichtungen (30) gelieferte Information,
• eine vom Benutzer gesendete Information;
**dadurch gekennzeichnet, dass** die Vorrichtung zur Erzeugung deskriptiver Informationen außerdem enthält:
- Einrichtungen (50) zum Lernen von Verhaltensweisen eines Benutzers, die eingerichtet sind, um eine Bestimmungsregel von Informationen zu erzeugen oder zu ändern, wobei die Bestimmungsregel abhängt von:
• einem Verhalten der Benutzeranpassung einer Anwesenheitsinformation durch den Benutzer, und
• mindestens einem deskriptiven Kontextparameter eines Kontexts, in dem sich der Benutzer befindet, wenn er das Verhalten zeigt.

2. Vorrichtung nach Anspruch 1, wobei die Lerneinrichtungen eingerichtet sind, um die Bestimmungsregel im Fall der Erfassung eines wiederholten Verhaltens des Benutzers in einem gegebenen Kontext zu erzeugen oder zu ändern.

3. Vorrichtung nach Anspruch 2, wobei das Verhalten eine Aktion enthält, um eine Änderung der mindestens einen Information anzufordern.

4. Vorrichtung nach Anspruch 2, die enthält, dass das Verhalten ein Verhalten der Benutzung von Kommunikationswerkzeugen ist.

5. Vorrichtung nach Anspruch 1, die Benachrichtigungseinrichtungen enthält, um im Fall der Erzeugung bzw. der Änderung einer Bestimmungsregel vom Benutzer zu verlangen, diese Bestimmungsregel zu bestätigen und/oder zu ändern.

6. Verfahren zur Erzeugung deskriptiver Informationen der Situation eines Benutzers zu einem gegebenen Zeitpunkt, wobei die Informationen dazu bestimmt sind, an andere Benutzer übertragen zu werden, wobei das Verfahren enthält
- einen Schritt der Anwendung von Lerneinrichtungen (50) des Verhaltens eines Benutzers, die eingerichtet sind, um eine Bestimmungsregel mindestens einer Information zu erzeugen oder zu ändern, wobei die Bestimmungsregel abhängt:
• von einem Verhalten der Benutzeranpassung einer Anwesenheitsinformation durch den Benutzer, und
• von mindestens einem deskriptiven Kontextparameter eines Kontexts, in dem sich der Benutzer befindet, wenn er das Verhalten zeigt, und
- einen Schritt der Bestimmung mindestens einer Information durch Anwendung mindestens einer Bestimmungsregel.

7. Verfahren nach Anspruch 6, wobei die Bestimmungsregel im Fall der Erfassung eines wiederholten Verhaltens des Benutzers in einem gegebenen Kontext erzeugt bzw. geändert wird.

8. EDV-Programm, das Software-Anweisungen zur Durchführung eines Verfahrens nach Anspruch 6 oder 7 enthält, wenn das Programm von einem Datenprozessor ausgeführt wird.

9. Aufzeichnungsträger, der von einem Datenprozessor lesbar ist, auf dem ein Programm aufgezeichnet ist, das Programmcodeanweisungen zur Ausführung der Schritte eines Verfahrens nach Anspruch 6 oder 7 enthält.

## Claims

1. Device for generating information descriptive of the situation of a user at a given instant, said information being intended to be transmitted to other users, the device comprising
- means (30) for determining at least one descriptive item of information by applying at least one determining rule;
- means (20) for generating a descriptive item of information as a function of at least one of the following items of information:
• a presence item of information generated by the generating means (20) prior to the descriptive item of information,
• the item of information provided by the determining means (30),
• an item of information sent by the user;
**characterized in that** the device for generating descriptive information further comprises:
- means (50) for learning behaviours of a user, designed to create or modify a rule for determining information, said determining rule being dependent:
• on a behaviour of personalization of a presence item of information by the user, and
• on at least one context parameter descriptive of a context in which said user finds himself when he manifests said behaviour.

2. Device according to Claim 1, in which the learning means are designed to create or modify said determining rule in case of detection of a repetitive behaviour of said user in a given context.

3. Device according to Claim 2, in which said behaviour comprises an action to request a modification of said at least one item of information.

4. Device according to Claim 2, comprising said behaviour is a behaviour of use of communication tools.

5. Device according to Claim 1, comprising means of notification for, in case of creation, respectively of modification, of a determining rule, asking the user to validate and/or modify this determining rule.

6. Method for generating information descriptive of the situation of a user at a given instant, said information being intended to be transmitted to other users, the method comprising
- a step of implementing means (50) for learning the behaviour of a user, designed to create or modify a rule for determining at least one said item of information, said determining rule being dependent:
• on a behaviour of personalization of a presence item of information by the user, and
• on at least one context parameter descriptive of a context in which said user finds himself when he manifests said behaviour, and
- a step of determining at least one said item of information by applying at least one said determining rule.

7. Method according to Claim 6, in which said determining rule is created, respectively modified, in case of detection of a repetitive behaviour of said user in a given context.

8. Computer program comprising software instructions for the implementation of a method according to Claim 6 or 7 when said program is executed by a data processor.

9. Recording medium readable by a data processor on which is recorded a program comprising program code instructions for the execution of the steps of a method according to Claim 6 or 7.
